# EUROPEAN PATENT SPECIFICATION

(11) **EP 0 556 169 B1**
(45) Date of publication and mention of the grant of the patent: **22.11.1995**
(21) Application number: 93850027.9
(22) Date of filing: 08.02.1993
(51) Int. Cl.: B62D 27/06

(54) **Stanchion for vehicle load platform**
Runge für eine Fahrzeug-Ladeplattform
Rancher pour une plateforme de chargement d'un véhicule

(30) Priority: 14.02.1992 SE 9200432
(43) Date of publication of application: 18.08.1993
(73) Proprietor: ROSEN, Göran, 531 16 Lidköping (SE)
(72) Inventor: ROSEN, Göran, 531 16 Lidköping (SE)
(74) Representative: Roth, Ernst Adolf Michael

(56) References cited:
- EP-A- 0 177 473
- EP-A- 0 334 387
- WO-A-88/01584
- DE-A- 2 706 063
- FR-A- 2 405 840
- SE-C- 218 048

## Description

The present invention refers to a stanchion for vehicle load platforms with a locking device built into the stanchion for individual, releasable locking of partly the stanchion to the load platform and partly at least one load flap to the stanchion and which locking device comprises at least one operating lever for actuation of a spring loaded lock plunger provided for interaction with the lock apparatus and at least one locking means provided for interaction with a platform attachment.

### BACKGROUND OF THE INVENTION

The locking device for stanchions of the above-mentioned type has in principle not changed since the construction was developed about 25 years ago and which is described in the swedish patent 218 048. According to this patent, and even later further developments, the operating handle operates versus the action of a pressure spring, that is provided to act direct on the lock plunger. This constructive design entails that the locking device demands a relatively large space in the longitudinal direction of the stanchion, which implies that the stanchion can not go below a certain definite length.

### THE OBJECT AND MOST ESSENTIAL FEATURES OF THE INVENTION

The purpose of the present invention is to achieve a locking device, that demands a smaller space, but at the same time does not forgo any of the requirements exacted on a modern stanchion. Thus it should not have bigger outer dimensions than earlier known stanchions, the locking device should be manageable, it should be designed such that the control lever at the opening of the device does not constitute a danger to the operator. These tasks have been solved by means of one end of the operating lever being articulatedly connected with the locking means and at some distance from this with a link, the opposite end of which is articulatedly connected with said lock plunger and that between the control lever and an attachment in the stanchion a pressure spring is provided, which attachment is formed as a support for the lock plunger in one of its end positions.

### SPECIFICATION OF THE DRAWINGS

The invention will be described in closer detail below with reference to the enclosed drawings, which disclose an embodiment.
Fig. 1 discloses the stanchion according to the invention in view and partly in section.
Fig. 2 is a section along the line II-II in fig. 1, with the locking device in closed position.
Fig. 3 is a with fig. 2 analogous view of the stanchion according to the invention with the locking device in a first disengaged position, in which a load flap is disengaged.

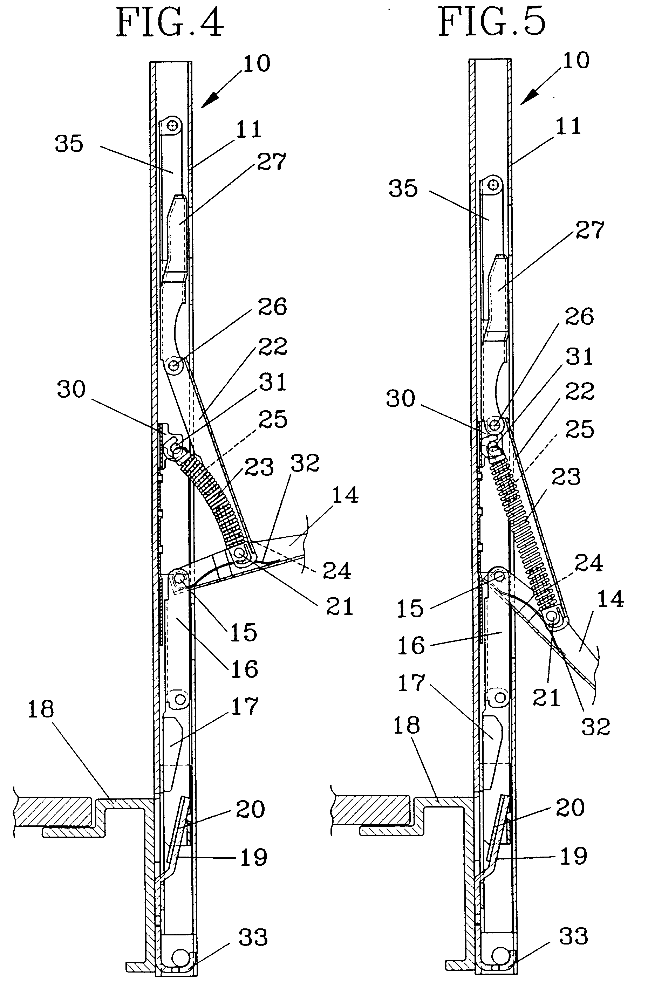

Fig. 4 discloses the same view as fig. 3, but with the locking device in a position, in which the lock plunger is closed and the lock wedge is disengaged from the platform attachment.
Fig. 5 finally discloses the same section as the figures 3 and 4, but with the locking device in a position, in which the lock plunger as well as the lock wedge are disengaged.

### DESCRIPTION OF EMBODIMENT

The stanchion according to the invention in its entirety is designated with 10 and consists of a stanchion housing 11, which is preferably constituted by a hollow profile which is rectangular in cross section. In this a locking device is provided, more exactly a platform lock device 12 and a flap lock device 13, which both are actuatable by a common control lever 14. This with one of its ends is pivotally connected via a pivot axis 15 to a connection link 16, which in its turn is connected to at least one lock wedge 17, which interacts with a platform attachment 19 provided at the vehichle platform 18. This attachment comprises guide-rails 20, which are formed with essentially the same inclination as the conic form of the lock wedge.

At the control lever 14 at some distance from the pivot axis 15 a further bearing pivot 21 is provided, that is a common bearing for partly a link arm 22 and partly a compression spring 23, which in both ends is guided by each guide dowel 24 and 25 respectively. The opposite end of the link arm 22 via a pivot pin 26 is pivotally connected with a lock plunger 27 axially movable in the stanchion housing 11, which plunger interacts with a lock armature 28 provided at one side edge of a load flap 29. The lock armature 28 is insertable in a recess 34 in the stanchion housing 11. The axial displacement of the lock plunger 27 in the stanchion housing 11 is limited in its lower end by a the stop member 30, which at the same time constitutes bearing holder for a bearing pivot 31, about which the guide dowel 25 is pivoted. The extension 35 of the lock plunger 27 shown in the drawing can be connected with several lock plungers if desired or be coupled to a lock device (not shown) for a cover support.

The control lever 14, which has U-formed cross section, is formed such, that between the shanks of the U the link arm 22 as well as the compression spring 23 may be located.

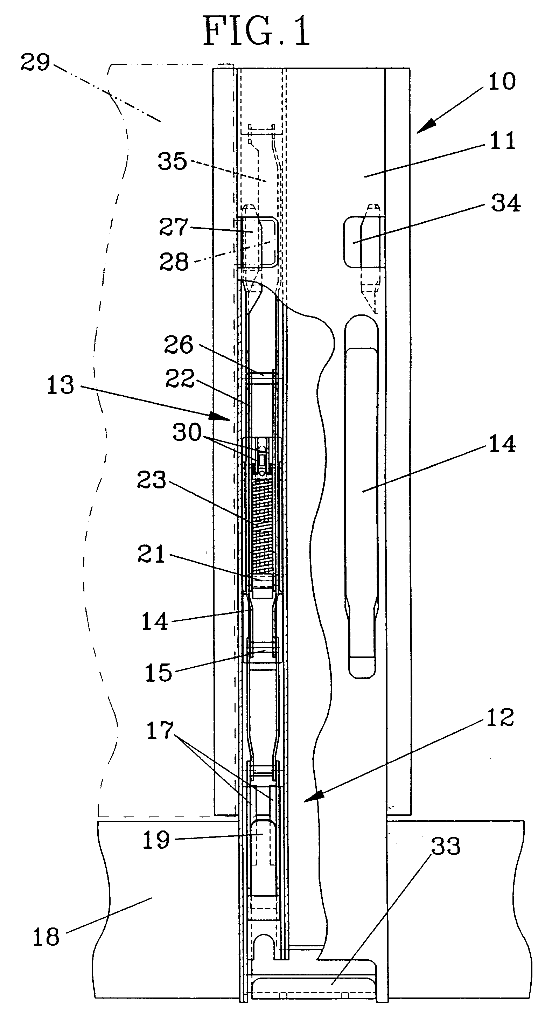

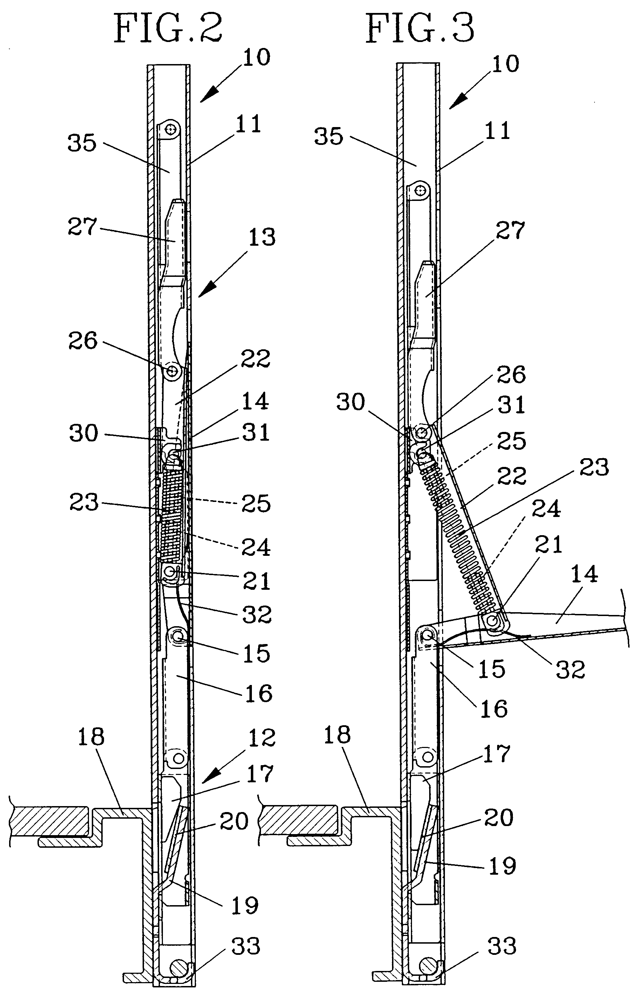

In the operating lever 14 folded up position, according to fig. 1 and 2, the platform lock device 12 as well as the flap lock device 13 are locked, which implies that the stanchion is locked to the platform and that the load flap 29 is locked to the stanchion 10. If merely the load flap shall be released from the stanchion the control lever 14 is swung to an intermediate position shown in fig. 3, in which the lock plunger 27 has been displaced downwards, so that the lock armature 28 of the load flap can leave the stanchion. The lock wedge 17 is still in its active locking position, which implies that the stanchion is locked to the platform. If the stanchion shall be removed to make the load platform more accessible, the control lever 14 is displaced to its lower end position, such as is shown in fig. 5, whereby the connection link 16 and the lock wedge 17, which both are axially displaceable in the stanchion housing 11, is brought out of engagement with guide-rail 20 of the platform attachment 19. The stanchion is thereby disengaged from the platform 18, and is retained only by the notch-formed end portion 33 of the platform attachment.

In order to damp the movement the operating lever 14 when the compression spring 23 is allowed to expand a leaf spring 32 is provided in the control lever 14, which presses against the lower end of the link arm 22 respectively its bearing pivot 21, so that a braking of the swing motion of the lever is obtained.

Since the compression spring 25 is connected to the control lever 14 it may in its entirety be located inside the control lever, which implies that the locking device of the stanchion can be made a corresponding length shorter.

### LIST OF REFERENCE DESIGNATIONS

- 10: = stanchion
- 11: = stanchion housing
- 12: = platform lock device
- 13: = flap lock device
- 14: = control lever
- 15: = pivot axis
- 16: = connection link
- 17: = locking means/lock wedge
- 18: = load platform
- 19: = platform attachment
- 20: = guide-rail
- 21: = bearing pivot
- 22: = link arm
- 23: = pressure spring
- 24,25: = guide
- 26: = bearing pivot
- 27: = lock plunger
- 28: = lock armature
- 29: = load flap
- 30: = the stop member/bearing holder
- 31: = bearing pivot
- 32: = leaf spring
- 33: = hook-shaped end portion
- 34: = recess
- 35: = extension

## Claims

1. Stanchion for vehicle load platforms with a locking device (12,13) built into the stanchion (10) for individual, releasable locking of partly the stanchion to the load platform (18) and partly at least one load flap (29) to the stanchion and which locking device comprises at least one operating lever (14) for actuation of a spring loaded lock plunger (27) provided for interaction with the load flap lock armature (28) and at least one locking means (17) provided for interaction with a platform attachment (19),
**characterized in**
that one end of the operating lever (14) is articulatedly connected to the locking means (17) and at some distance from this with a link arm (22), the opposite end of which is articulatedly connected to said lock plunger (27) and in that between the control lever (14) and a bracket (30) in the stanchion a compression spring (23) is provided, which bracket (30) is formed as a support for the lock plunger (27) in one of its end positions.

2. Stanchion according to claim 1,
**characterized in**,
that the compression spring (23) in both ends is guided by means of guide dowels (24,25).

3. Stanchion according to claim 2,
**characterized in**,
that the bearing holder of the link arm (22) at the control lever (14) is designed also as a bearing holder for one guide dowel (24) of the compression spring (23).

4. Stanchion according to claims 1,
**characterized in**,
that the control lever (14) is U-formed in cross section and provided between the shanks of the U to receive the link arm (22) as well as the compression spring (25).

## Patentansprüche

1. Runge für Kraftfahrzeug-Ladebühnen mit einem in die Runge (10) eingebauten Verriegelungsmechanismus (12,13) zur einzeln lösbaren Verriegelung teils der Runge mit der Ladebühne (18) und teils von mindestens einer Ladeklappe (29) mit der Runge, wobei der Verriegelungsmechanismus mindestens einen Bedienhebel (14) zum Betätigen eines für das Zusammenwirken mit der Verriegelungsarmatur (28) der Ladeklappe vorgesehenen federgelagerten Schließkolbens (27) und mindestens ein Sperrelement (17) für das Zusammenwirken mit einer Ladebühnenhalterung (19) aufweist,
**gekennzeichnet dadurch**,
daß ein Ende des Bedienhebels (14) gelenkig mit dem Sperrelement (17) und in gewisser Entfernung von diesem mit einem Verbindungsarm (22) verbunden ist, dessen gegenüberliegendes Ende gelenkig mit besagtem Schließkolben (27) verbunden ist, und daß zwischen dem Bedienhebel (14) und einem Anschlag (30) innerhalb der Runge, welcher als Auflage für den Schließkolben (27) in einer seiner Endstellungen ausgebildet ist, eine Druckfeder gelagert wurde.

2. Runge gemäß Anspruch 1,
**gekennzeichnet dadurch**,
daß die Druckfeder (23) an beiden Enden durch Führungsstifte (24,25) geführt wird.

3. Runge gemäß Anspruch 2,
**gekennzeichnet dadurch**,
daß der Führungszapfen des Verbindungsarms (22) am Bedienhebel (14) ebenfalls als Führungszapfen für einen Führungsstift (24) der Druckfeder (23) ausgelegt ist.

4. Runge gemäß Anspruch 1
**gekennzeichnet dadurch**,
daß der Bedienhebel (14) einen U-förmigen Querschnitt aufweist und sich zwischen den U-Schenken befindet, um sowohl den Verbindungsarm (22) als auch die Druckfeder (23) aufzunehmen.

## Revendications

1. Rancher pour une plate-forme de chargement d'un véhicule avec un mécanisme de verrouillage (12, 13) incorporé au rancher (10) permettant le verrouillage et le déverrouillage individuel d'une part du rancher sur la plate-forme de chargement (18) et d'autre part d'au moins un volet de chargement (29) sur la plate-forme de chargement, ledit mécanisme de verrouillage comprenant au moins un levier de commande (14) pour actionner un piston de verrouillage (27) soumis à l'action d'un ressort et prévu pour coopérer avec la barre de verrouillage (28) du volet de chargement et au moins un verrou (17) prévu pour coopérer avec une attache de plate-forme (19), caractérisé en ce que l'une des extrémités du levier de commande (14) est reliée par une articulation au verrou (17), et à une certaine distance de cette extrémité, à une barre de liaison (22) dont l'extrémité opposée est articulée sur ledit piston de verrouillage (27), et par le fait qu'entre le levier de commande (14) et une attache (30) sur le rancher, il est prévu un ressort de compression (23), ladite attache (30) étant prévue pour supporter le piston de verrouillage (27) dans l'une de ses positions extrêmes.

2. Rancher selon la revendication 1, caractérisé en ce que le ressort de compression (23) est guidé à ses deux extrémités par des chevilles de guidage (24, 25).

3. Rancher selon la revendication 2, caractérisé en ce que l'élément porteur du bras de liaison (22) est également conçu en tant qu'élément porteur pour une cheville de guidage (24) du ressort de compression (23).

4. Rancher selon la revendication 1, caractérisé en ce que le levier de commande (14) a une section transversale en forme de U permettant au bras de liaison (22) et au ressort de compression (23) de se loger tous deux entre les côtés du U.
